# FASCICULE DE BREVET EUROPEEN

(11) **EP 1 176 287 B1**
(45) Date de publication et mention de la délivrance du brevet: **06.07.2005**
(21) Numéro de dépôt: 01402031.7
(22) Date de dépôt: 26.07.2001
(51) Int. Cl.: F01L 9/04, F02D 41/20

(54) **Dispositif de pilotage des actionneurs de soupapes d'un moteur à combustion interne à courant d'alimentation stabilisé**
Vorrichtung zur Steuerung von Hubventilaktuatoren mit Stromregelung
Valve actuator driving device with stabilized current

(30) Priorité: 27.07.2000 FR 0009878
(43) Date de publication de la demande: 30.01.2002
(73) Titulaire: Peugeot Citroen Automobiles SA, 92200 Neuilly sur Seine (FR)
(72) Inventeur: Guerin, Stéphane, 92250 La Garenne Colombes (FR)
(74) Mandataire: Habasque, Etienne Joel Jean-François

(56) Documents cités:
- EP-A- 1 010 867
- PATENT ABSTRACTS OF JAPAN vol. 1998, no. 10, 31 août 1998 (1998-08-31) & JP 10 131726 A (ISUZU MOTORS LTD), 19 mai 1998 (1998-05-19)

## Description

La présente invention est relative à la commande de soupapes électromagnétiques pour moteur à combustion interne et se rapporte plus particulièrement à la commande de telles soupapes à l'aide d'un calculateur de commande des actionneurs des soupapes.

Un calculateur de commande de soupapes est généralement formé d'un circuit électronique de puissance (600W pour huit soupapes et 1700 W pour seize soupapes).

Il est généralement directement alimenté par la batterie d'accumulateur du véhicule, ce qui pose des problèmes de compatibilité avec le réseau de bord à 14V du véhicule.

Actuellement, l'application en série de soupapes électromagnétiques sur un véhicule est systématiquement associée à l'emploi coûteux d'un alterno-démarreur ou d'une tension d'alimentation de 42 V.

En effet, lorsque le calculateur est connecté directement à la batterie d'accumulateur, le courant consommé par le système est de type impulsionnel de sorte que la tension de la batterie fluctue. Ceci peut perturber les autres appareils électroniques branchés aux bornes de la batterie.

On connaît également du document EP-A-1 010 867 un dispositif conforme au préambule de la revendication 1.

Mais ce dispositif présente des problèmes de stabilité de fonctionnement.

L'invention vise à créer un dispositif de pilotage des actionneurs de soupapes d'un moteur à combustion interne qui ne présente aucun problème de compatibilité avec le réseau de bord du véhicule.

Elle a donc pour objet, un dispositif de pilotage des actionneurs de soupapes d'un moteur à combustion interne comprenant un calculateur muni d'une unité de commande de soupapes et alimenté à partir de la batterie d'accumulateur du véhicule, caractérisé en ce qu'il comporte en outre un dispositif de stabilisation du courant d'alimentation du calculateur délivré par la batterie, par rapport à une valeur de consigne de courant, pour que le courant d'entrée appliqué à l'unité de commande des soupapes soit égal au courant de consigne.

Suivant d'autres caractéristiques de l'invention:
- le dispositif de stabilisation de courant comprend une chaîne de puissance de type "Boost" comprenant une inductance, une diode, un interrupteur statique et un condensateur et une boucle de régulation du courant d'entrée à appliquer à l'interrupteur statique de la chaîne de puissance en fonction de la tension de sortie de la chaîne de puissance, du courant dans l'inductance et d'une consigne provenant du calculateur de commande des soupapes, ladite boucle de régulation de courant assurant en outre une limitation de la tension de sortie de la chaîne de puissance ;
- la boucle de régulation de courant et la chaîne de puissance sont incorporées au calculateur ;
- la boucle de régulation de courant est incorporée au calculateur et la chaîne de puissance est séparée du calculateur ;
- la boucle de régulation de courant et la chaîne de puissance sont séparées du calculateur ;
- l'inductance de ladite chaîne de puissance est connectée à la borne positive de la batterie, la cathode de la diode de sortie est connectée à la borne d'entrée correspondante du calculateur et le condensateur est connecté aux bornes du calculateur,
- la batterie d'alimentation est une batterie de 12 V.

L'invention sera mieux comprise à la lecture de la description qui va suivre faite en référence aux dessins annexés, donnés uniquement à titre d'exemple et sur lesquels :
- la Fig.1 est un schéma synoptique d'une première architecture de circuit du dispositif de pilotage suivant l'invention ;
- la Fig.2 est un schéma synoptique d'une deuxième architecture de circuit du dispositif de pilotage suivant l'invention ;
- la Fig.3 est un schéma synoptique d'une troisième architecture de circuit du dispositif de pilotage suivant l'invention ;
- la Fig.4 est un diagramme en fonction du temps montrant l'allure du courant d'alimentation du calculateur et celle de la tension de la batterie en l'absence de dispositif de stabilisation de courant ; et
- la Fig.5 est un diagramme en fonction du temps montrant l'allure du courant d'alimentation du calculateur lors de la présence d'un filtre entre la batterie et le calculateur.

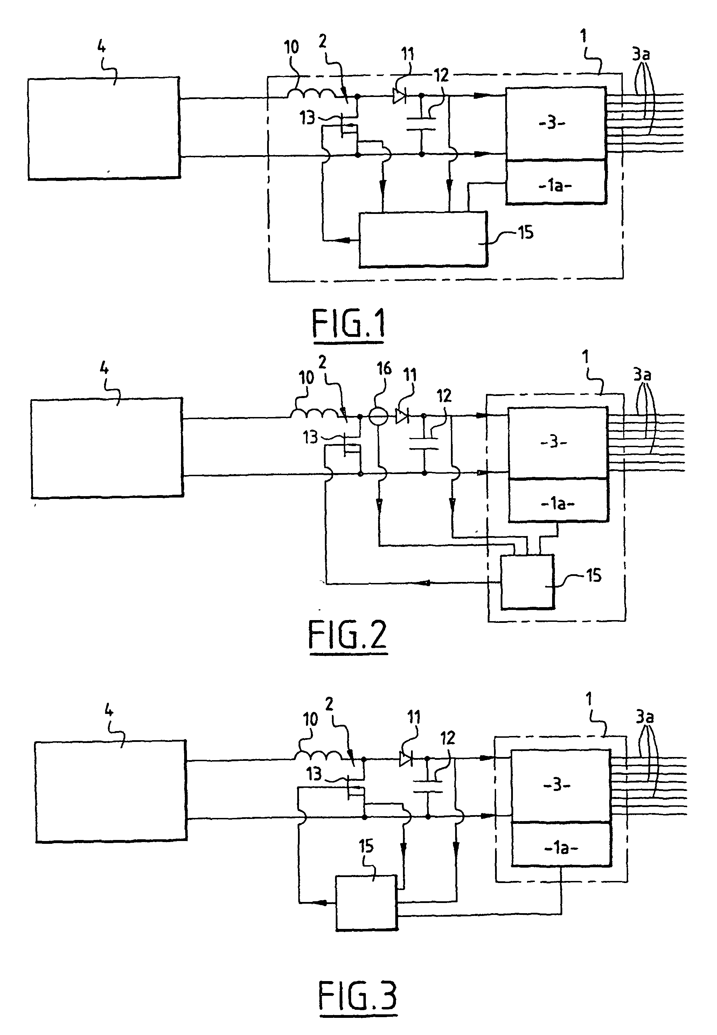

Selon un mode de réalisation préféré de l'invention, le circuit représenté à la figure 1 comprend un calculateur 1 de commande de soupapes comportant une chaîne de puissance 2 et une unité 3 de commande de soupapes à huit sorties 3a par exemple lorsqu'il s'agit de commander un moteur à huit soupapes.

Les entrées de la chaîne de puissance 2 sont connectées à une batterie d'accumulateur 4, tandis que ses sorties sont reliées aux entrées du calculateur 1. La chaîne de puissance 2 du type "Boost" comprend une inductance 10 connectée à une diode 11, elle-même reliée à un condensateur 12. Entre le point de jonction de l'inductance 10 et de la diode 11 et la borne du condensateur 12 opposée à la diode 11, est connecté un interrupteur statique 13 tel qu'un transistor bipolaire, ou MOS ou un IGTB. La chaîne de puissance 2 est intégrée au calculateur 1, le point de jonction de la diode 11 et du condensateur 12 étant connecté à une entrée de l'unité 3 de commande de soupapes, tandis que l'autre borne du condensateur 12 est connectée à l'autre entrée de l'unité 3 de commande de puissance.

Le dispositif de pilotage comporte en outre une boucle 15 de régulation de courant comportant par exemple un microprocesseur dont une première entrée est connectée à la borne du condensateur 12 sur laquelle apparaît la tension de sortie de la chaîne de puissance 2, dont une seconde entrée est destinée à recevoir le courant circulant dans l'inductance 10 de la chaîne de puissance et dont une troisième entrée est destinée à recevoir un signal correspondant à un courant de consigne provenant d'une unité 1a du calculateur 1.

Selon ce premier mode de réalisation, la chaîne de puissance 2 et la boucle 15 de régulation de courant font partie du calculateur 1.

La tension de sortie de la chaîne de puissance est prélevée sur le condensateur 12, le courant de l'inductance 10 est mesuré à la sortie de l'interrupteur statique 13 qui en l'occurrence est un transistor MOS.

La sortie de la boucle de régulation 15 est connectée à l'électrode de commande de l'interrupteur statique 13.

Le circuit représenté à la figure 2 comprend un calculateur 1 de commande de soupapes comportant une chaîne de puissance 2 et une unité 3 de commande de soupapes, à huit sorties 3a par exemple.

Le calculateur 1 est connecté à la batterie d'accumulateur 4 par l'intermédiaire de la chaîne de puissance 2 qui est séparée du calculateur.

En revanche, la boucle de régulation de courant 15 fait partie du calculateur 1.

Dans ce mode de réalisation, la mesure du courant dans l'inductance est assurée par un transformateur de courant 16 entourant le conducteur reliant l'inductance 10 à la diode 11 et connecté à la borne correspondante de la boucle de régulation de courant 15.

Selon la variante de la figure 3, le calculateur de commande de soupapes 1 ne comporte que l'unité de commande 3 alors que la chaîne de puissance 2 et la boucle 15 de régulation de courant sont séparées du calculateur.

La tension de sortie de la chaîne de puissance 2 n'est pas régulée mais juste limitée à une valeur maximum prédéterminée, de 42 volts par exemple et son courant d'entrée est régulé à l'aide de la consigne provenant du calculateur 1. La valeur de ce courant est égale au courant moyen consommé par la commande de soupapes pour le régime du moteur et pour la tension de batterie d'entrée à l'instant considéré.

Le condensateur 12 est un condensateur de forte capacité, de 30 mF par exemple.

Le fonctionnement du dispositif qui vient d'être décrit est le suivant.

La boucle 15 de régulation de courant reçoit le courant mesuré soit au niveau de l'inductance comme représenté à la figure 2, soit au niveau de l'interrupteur statique 13 lorsqu'il est passant.

Ce courant est comparé à la consigne reçue du calculateur 1 et agit sur la commande de l'interrupteur statique 13 pour que le courant d'entrée applique à l'unité 3 de commande de soupapes soit égal au courant de consigne.

En outre, la boucle de régulation de courant 15 reçoit sur une de ses entrées, la valeur de la tension de sortie de la chaîne de puissance qu'elle limite en cas de dépassement par celle-ci d'une valeur prédéterminée, 42 volts par exemple.

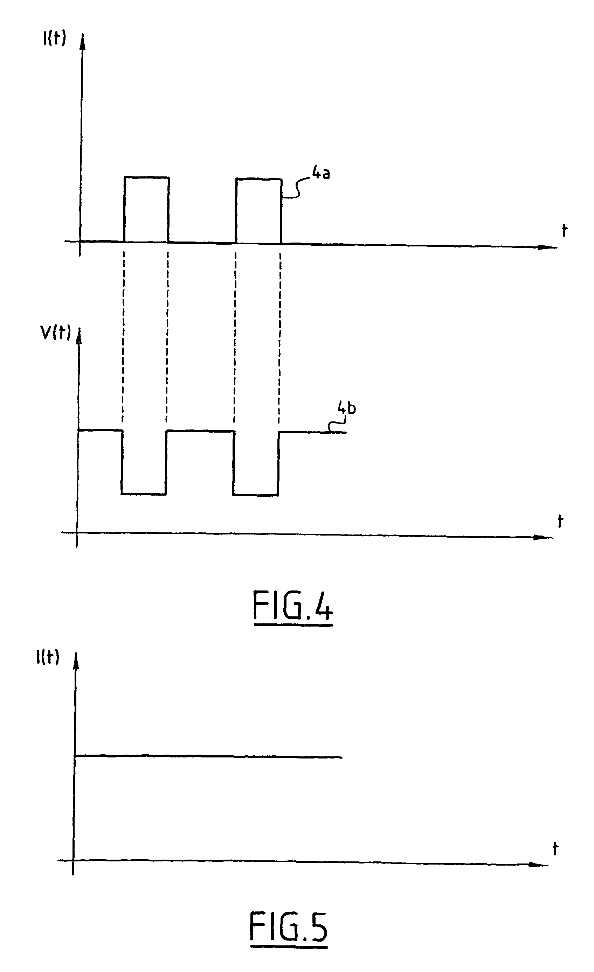

En absence de dispositif de stabilisation de courant, le comportement du circuit est représenté à la figure 4 sur laquelle la courbe 4a représente l'allure en fonction du temps du courant délivré au calculateur 1.

On voit que le courant consommé par le système est de type impulsionnel.

Par exemple, pour un régime de 6 000 t/mn les impulsions de courant se produisent toutes les 5 ms et ont une largeur de 2 ms environ.

Il en résulte, comme le montre la courbe 4b, que la tension de la batterie fluctue également de façon impulsionnelle et accuse une baisse à chaque pic de courant.

La fluctuation de la tension de la batterie peut perturber les autres appareils électriques branchés sur la batterie.

Au lieu d'être fourni directement par l'alternateur, le courant est fourni par la batterie rechargée plus lentement par l'alternateur. Cela augmente la consommation électrique globale, car la batterie n'a pas un rendement égal à 100%

Grâce à l'intervention du dispositif de stabilisation de courant 5, des circuits des figures 1 à 3, le courant est du type représenté à la figure 5 c'est-à-dire, qu'il varie très lentement sans présenter les baisses de tension représentées à la figure 4.

L'agencement qui vient d'être décrit permet grâce à l'invention de se satisfaire d'une alimentation sur le réseau de bord conventionnel à 12 V des véhicules automobiles.

## Revendications

1. Dispositif de pilotage des actionneurs de soupapes d'un moteur à combustion interne comprenant un calculateur (1) muni d'une unité (3) de commande de soupapes et alimenté à partir de la batterie d'accumulateur du véhicule, **caractérisé en ce qu'**il comporte en outre un dispositif (2,15) de stabilisation du courant d'alimentation du calculateur délivré par la batterie, par rapport à une valeur de consigne de courant, pour que le courant d'entrée appliqué à l'unité (3) de commande des soupapes soit égal au courant de consigne.

2. Dispositif suivant la revendication 1, **caractérisé en ce que** le dispositif de stabilisation de courant comprend une chaîne de puissance (2) de type "Boost" comprenant une inductance (10), une diode (11), un interrupteur statique (13) et un condensateur (12) et une boucle (15) de régulation du courant d'entrée à appliquer à l'interrupteur statique (13) de la chaîne de puissance (2) en fonction de la tension de sortie de la chaîne de puissance, du courant dans l'inductance (10) et d'une consigne provenant du calculateur (1) de commande des soupapes, ladite boucle (15) de régulation de courant assurant en outre une limitation de la tension de sortie de la chaîne de puissance (2).

3. Dispositif suivant l'une des revendications 1 et 2, **caractérisé en ce que** la boucle (15) de régulation de courant et la chaîne de puissance (2) sont incorporée au calculateur (1).

4. Dispositif suivant l'une des revendications 1 et 2, **caractérisé en ce que** la boucle (15) de régulation de courant est incorporée au calculateur (1) et la chaîne de puissance (2) est séparée du calculateur (1).

5. Dispositif suivant l'une des revendications 1 et 2, **caractérisé en ce que** la boucle (15) de régulation de courant et la chaîne de puissance (2) sont séparées du calculateur (1).

6. Dispositif suivant l'une des revendications 1 à 5, **caractérisé en ce que** l'inductance (10) de ladite chaîne de puissance (2) est connectée à la borne positive de la batterie (4) et la cathode de la diode de sortie (11) est connectée à la borne d'entrée correspondante du calculateur (1) et le condensateur (12) est connecté aux bornes du calculateur (1).

7. Dispositif suivant l'une quelconque des revendications précédentes, **caractérisé en ce que** la batterie d'alimentation (4) est une batterie de 12 volts.

8. Dispositif suivant l'une des revendications 2 à 7, **caractérisé en ce que** la boucle (15) de régulation de courant comporte un microprocesseur.

## Patentansprüche

1. Vorrichtung zur Steuerung der Stellglieder von Ventilen eines Verbrennungsmotors mit einem Rechner (1), der mit einer Einheit (3) zur Steuerung von Ventilen ausgestattet ist und von der Akkumulatorbatterie des Fahrzeugs gespeist wird, **dadurch gekennzeichnet, daß** sie außerdem eine Vorrichtung (2, 15) zur Stabilisierung des Versorgungsstroms des Rechners, welcher von der Batterie geliefert wird, bezüglich eines Stromsollwerts umfaßt, damit der an die Einheit (3) zur Steuerung der Ventile angelegte Eingangsstrom gleich dem Sollstrom ist.

2. Vorrichtung nach Anspruch 1, **dadurch gekennzeichnet, daß** die Stromstabilisierungsvorrichtung eine Leistungskette (2) vom "Boost"-Typ mit einer Induktivität (10), einer Diode (11), einem statischen Unterbrecher (13) und einem Kondensator (12) und eine Schleife (15) zur Regelung des an den statischen Unterbrecher (13) der Leistungskette (2) anzulegenden Eingangsstroms in Abhängigkeit von der Ausgangsspannung der Leistungskette, vom Strom in der Induktivität (10) und von einem Sollwert, der vom Rechner (1) zur Steuerung der Ventile stammt, umfaßt, wobei die Stromregelungsschleife (15) außerdem eine Begrenzung der Ausgangsspannung der Leistungskette (2) sicherstellt.

3. Vorrichtung nach einem der Ansprüche 1 und 2, **dadurch gekennzeichnet, daß** die Stromregelungsschleife (15) und die Leistungskette (2) in den Rechner (1) integriert sind.

4. Vorrichtung nach einem der Ansprüche 1 und 2, **dadurch gekennzeichnet, daß** die Stromregelungsschleife (15) in den Rechner (1) integriert ist und die Leistungskette (2) vom Rechner (1) getrennt ist.

5. Vorrichtung nach einem der Ansprüche 1 und 2, **dadurch gekennzeichnet, daß** die Stromregelungsschleife (15) und die Leistungskette (2) vom Rechner (1) getrennt sind.

6. Vorrichtung nach einem der Ansprüche 1 bis 5, **dadurch gekennzeichnet, daß** die Induktivität (10) der Leistungskette (2) mit der positiven Anschlußklemme der Batterie (4) verbunden ist und die Kathode der Ausgangsdiode (11) mit der entsprechenden Eingangsanschlußklemme des Rechners (1) verbunden ist und der Kondensator (12) mit den Anschlußklemmen des Rechners (1) verbunden ist.

7. Vorrichtung nach einem der vorangehenden Ansprüche, **dadurch gekennzeichnet, daß** die Versorgungsbatterie (4) eine Batterie mit 12 Volt ist.

8. Vorrichtung nach einem der Ansprüche 2 bis 7, **dadurch gekennzeichnet, daß** die Stromregelungsschleife (15) einen Mikroprozessor umfaßt.

## Claims

1. Device for driving the actuators of valves of an internal combustion engine comprising a computer (1) equipped with a valve control unit (3) and supplied by the storage battery of the vehicle, charactensed in that it further comprises a device (2, 15) by which the current supp lied to the computer and delivered by the battery is stabilised relative to a desired current value, so that the input current applied to the valve control unit (3) is equal to the desired current.

2. Device as claimed in Claim 1, **characterised in that** the current stabilisation device comprises a power chain (2) of the "Boost" type comprising an inductor (10), a diode (11), a static switch (13) and a capacitor (12) and a loop (15) for regulation of the input current to be applied to the static switch (13) of the power chain (2) as a function of the output voltage of the power chain, the current in the inductor (10) and a desired value provided by the valve control computer (1), the said current regulation loop (15) further ensuring a limitation of the output voltage of the power chain (2).

3. Device as claimed in any one of Claims 1 and 2, **characterised in that** the current regulation loop (15) and the power chain (2) are incorporated into the computer (1).

4. Device as claimed in any one of Claims 1 and 2, **characterised in that** the current regulation loop (15) is incorporated into the computer (1) and the power chain (2) is separate from the computer (1).

5. Device as claimed in any one of Claims 1 and 2, **characterised in that** the current regulation loop (15) and the power chain (2) are separate from the computer (1).

6. Device as claimed in any one of Claims 1 to 5, **characterised in that** the inductor (10) of the said power chain (2) is connected to the positive terminal of the battery (4) and the cathode of the output diode (11) is connected to the corresponding input terminal of the computer (1) and the capacitor (12) is connected to the terminals of the calculator (1).

7. Device as claimed m any one of the preceding claims, **characterised in that** the power supply battery (4) is a 12 Volt battery.

8. Device as claimed in any one of Claims 2 to 7, **characterised in that** the current regulation loop (15) includes a microprocessor.
